# EUROPEAN PATENT APPLICATION

(11) **EP 1 202 528 A2**
(43) Date of publication of application: **02.05.2002**
(21) Application number: 01125371.3
(22) Date of filing: 30.10.2001
(51) Int. Cl.: H04L 29/06

(54) **Browser-based monitoring system and method for IP-based services**

(30) Priority: 31.10.2000 US 702961
(71) Applicant: Alcatel USA Sourcing, L.P., Plano, Texas 75075 (US)
(72) Inventor: Stevens, Gilman R., Fairview, TX 75069 (US); Mani, Babu V., Plano, TX 75025 (US)
(74) Representative: Dreiss, Fuhlendorf, Steimle & Becker

(57) **Abstract**

A browser-based monitoring system and method operable in a network including the Internet. A browser operable with a user's Internet-compliant device is provided for launching a transaction session, wherein a media-based parametric detector is associated with the browser in order to track a plurality of media-based parameters and metrics generated during the transaction session. The media-based parameters and metrics are effectuated at least in part due to the user's interaction with the browser with respect to the transaction session. A reporting structure is provided in association with the browser for reporting the media-based parameters and metrics to an Internet entity for effectuating an IP-based service. For example, where an Internet billing entity receives such data, which entity may comprise an Internet service/access provider (ISP/IAP), an application service provider (ASP), or a third-party billing company having service agreements with such providers, a use-based billing record may be generated based on at least a portion of the received media-based parametrics.

## Description

### CROSS-REFERENCE TO RELATED APPLICATION(S)

This application discloses subject matter related to the subject matter disclosed in the following commonly-assigned patent application(s): (1) "Internet Payment System and Method," filed , Ser. No. (Attorney Docket Number: 1285-0041 US), in the name(s) of: Gilman R. Stevens and Babu V. Mani.

### BACKGROUND OF THE INVENTION

### Technical Field of the Invention

The present invention relates to communication and computer networks and services and, more particularly, to a browser-based monitoring system and method operable in a network including a public computer network (e.g., the Internet).

### Description of Related Art

Driven by the myriad advances in networking technology that are taking place at an unprecedented rate, Internet access solutions and Internet-based applications such as e-commerce have become the mainstay of today's New Economy. Internet service providers (ISPs) and Internet access providers (IAPs), which provide access to the Internet and range in size from small, local operators to national entities offering connectivity services nationwide or internationally in some instances, are now as ubiquitous as local hardware stores and compete vigorously for subscribers by offering a variety of pricing plans and variable bandwidth services. Further, an increasing number of prominent national ISPs have begun to offer proprietary services and content in addition to simple Internet access. Examples of these ISPs include America Online (AOL), EarthLink/Mindspring, WorldNet, Prodigy, etc.

In the e-commerce arena, a large number of "soft" or "information" goods (such as news stories, application software, network games, database access, and multimedia entertainment) are being offered on the Internet. Because information goods tend to have negligible marginal costs, novel distribution and pricing methods are being increasingly explored for such goods that are likely to be consumed in large quantities by individuals. E-market researchers nowadays model and predict consumer behavior by analyzing Internet clickstream data at online stores such as, e.g., number of hits, page views, and average time spent at a site.

Despite these multifarious advances, there still exist significant deficiencies and shortcomings in the state-of-the-art Internet-based systems and methods. For example, while the ISPs and IAPs offer variable bandwidth and pricing plans, there are no known solutions available to the subscribers (or, synonymously, users) for validating and verifying their bandwidth use with respect to the plans they purchase from the service providers. Consequently, there are no means available to them for arbitrating with the service provider should the service become less than what is bargained for.

In addition, current technologies do not provide for measuring subscribers' content and soft goods usage, which thereby thwarts development of rational billing/pricing schemes for such usage. Although pricing models such as fixed-fee pricing (i.e., subscription pricing) and pay-per-use pricing are known, it should be appreciated that due to the lack of relevant knowledge regarding users' preferences and usage pattern, the pricing schemes applied in a particular context may be sub-optimal (that is, not a revenue maximizer).

Moreover, because of the lack of accurate knowledge with respect to subscribers' usage patterns, development of Internet Protocol-based services (IP-based services) -- which can be sources of a substantial revenue stream for a service provider -- has been rather slow. For example, there are no known mechanisms for assuring a particular level of Quality of Service (QoS) in the Internet arena. Similarly, network performance monitoring, targeted advertising, dynamic service management, etc. are not currently available with respect to Internet-based transactions.

### SUMMARY OF THE INVENTION

Accordingly, the present invention advantageously provides a browser-based monitoring system and method operable in a network including the Internet. A browser or micro-browser (hereinafter, collectively "browser") operable with a user's Internet-compliant device is provided for launching a transaction session, wherein a media-based parametric detector is operably associated with the browser in order to track a plurality of media-based parameters and metrics generated during the transaction session. The media-based parameters and metrics are effectuated at least in part due to the user's interaction with the browser with respect to the transaction session. A reporting structure is operably associated with the browser for reporting the media-based parameters and metrics to an appropriate Internet/IP entity such as, e.g., an Internet billing entity, which may comprise an Internet service/access provider (ISP/IAP), an application service provider (ASP), or a third-party billing company having service agreements with such providers. The billing entity then generates a bill based on at least a portion of the received media-based parametrics.

In addition to the billing entity, the reporting structure is operable to transmit the parametric data to other Internet entities or nodes whereby the following IP-based services may be advantageously implemented: Quality of Service (QoS) assurance; network performance monitoring and fine-tuning; targeted online advertisements; usage statistics and measurements; security (personal, network, service-related); and dynamic management of service parameters based on the data collected.

Preferably, the media-based metric parameters comprise at least one of: Markup Language tags such as HTML/XML/VXML tags, control characters embedded in the content and content elements that are sent and/or received, network pings/tracebacks effectuated for the Internet-compliant device, cookies generated during the transaction session, time and bandwidth metrics, click-to-response upload and download times, and auxiliary media services (for example, chat sessions, e-mail, video conferences, Voice-over-IP sessions, etc.) that are invoked during the transaction session. Some of these parameters may also be collected at different nodes in the network such as, e.g., Media Gateways (MGWs), Media Gateway Controllers, (MGWCs), switches/routers, feature/policy servers, etc. When the present invention's monitoring system is implemented for purposes of billing, such statistics are then concentrated at the ISP serving the user for subsequent transmission to the billing operator/entity.

In a presently preferred exemplary embodiment of the present invention, any Internet-compliant device having a browser or micro-browser may be used for launching a transaction session that can be monitored and/or billed in accordance with the teachings contained herein. Accordingly, devices such as personal computers, laptop computers, palmtop/hand-held computers, H.323-compatible terminals, Session Initiation Protocol (SIP)-based phones, Personal Digital Assistant (PDA) devices, and Web-enabled interactive terminals (e.g., Web-enabled wireless/wireline phones, multimedia players, game stations and TV sets), etc. may be provided with the browser-based monitoring system of the present invention.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary network embodiment including the Internet for effectuating a browser-based monitoring system in accordance with the teachings of the present invention;
FIG. 2 depicts another exemplary network embodiment including the Internet for effectuating the browser-based monitoring system in accordance with the teachings of the present invention; and
FIG. 3 is a flow chart of the steps involved in an exemplary embodiment of the browser-based monitoring method of the present invention.

### DETAILED DESCRIPTION OF THE DRAWINGS

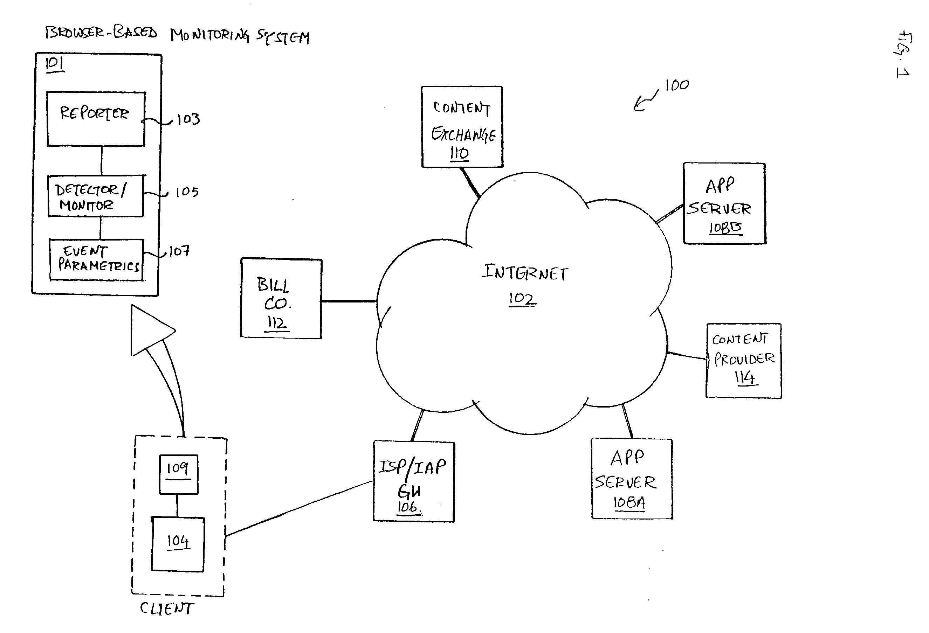

In the drawings, like or similar elements are designated with identical reference numerals throughout the several views thereof, and the various elements depicted are not necessarily drawn to scale. Referring now to FIG. 1, depicted therein is an exemplary network embodiment 100 including the Internet 102 for effectuating a browser-based monitoring scheme in accordance with the teachings of the present invention. As is well known, the Internet 102 is operable to interconnect a vast number of entities capable of providing diverse services to users worldwide. Some of these entities include, for example, content exchanges 110 where a user can exchange multimedia content with other users or download content provided by a content originator (e.g., musicians, artists, authors, painters, etc.) at the exchange. Entities such as content providers 114 exemplify the ubiquitous businesses on the Internet that facilitate worldwide dissemination of myriad forms of content (e.g., audio, video, text, interactive multimedia, et cetera). Application service providers (ASPs), exemplified by application servers 108A and 108B, provide applications that can be accessed by the users via the Internet 102 for a host of specific purposes (e.g., word-processing software applications; authoring tools; accounting/auditing packages; supply-chain management software; business-to-business (B2B) and business-to-customer (B2C) software packages; software for medical, legal and other professional applications; customer relations management (CRM) software; computer telephony software; email applications; interactive game software; et cetera). As is well known, all these entities are disposed in a server-client relationship with respect to the users and are accessible as part of the World-Wide Web (WWW or the Web) by means of their Uniform Resource Locator (URL) addresses.

An Internet service provider or access provider (ISP/IAP) 106 serves a user operating an Internet-compliant device 104 as a client for accessing the entities illustrated hereinabove. Preferably, the Internet-compliant device 104 can be any device that is equipped with a browser or micro-browser 109 capable of launching an Internet transaction session. Accordingly, personal computers, laptop computers, hand-held computers, H.323-compatible terminals, Session Initiation Protocol (SIP)-based phones, Personal Digital Assistant (PDA) devices, and Web-enabled interactive terminals such as Web-enabled wireless/wireline phones, multimedia players, Web-enabled TVs and game stations, et cetera, may be used as client devices for practicing the teachings of the present invention. Furthermore, for purposes of the present invention, a transaction session may involve an online session with a host computer disposed on the Internet, accessing an Internet page stored locally on the user's Internet-compliant device 104, or both.

In accordance with the teachings of the present invention, the client device 104 is provided with a browser-based monitoring system 101 (which, in one exemplary implementation, is usable for billing, accounting, etc.), preferably provided as a plug-in operable in association with the browser 109. In a presently preferred exemplary embodiment of the present invention, the plug-in may be provided as a sequence of instructions stored in a computer-accessible medium that are executable on a processing entity when the browser is launched. Further, the plug-in may be provided as a downloadable utility from a software provider, or as an article of manufacture such as stored media (e.g., floppy disks, CD-ROMs, and the like).

The browser-based monitoring system 101 is capable of monitoring a plurality of media-based parameters and metrics 107 generated during a transaction session by means of a detector 105 associated therewith. Preferably, the media-based parameters/metrics 107 are effectuated at least in part due to the user's interaction with the browser 109 with respect to the transaction session. A reporting structure 103 is provided with the browser-based monitoring system 101 for reporting the media-based parameters and metrics to an Internet entity such as, e.g., a billing entity, which may comprise an ISP/IAP serving the user (e.g., ISP/IAP 106), a host accessed by the user during the transaction session (e.g., application server 108A, content exchange 110, or content provider 114), or a third-party billing company 112 having service agreements with such provider entities.

Furthermore, in some exemplary embodiments of the present invention, the reporting structure 103 is operable to transmit the parametric data to other Internet entities or nodes (e.g., ISP/IAP nodes, advertisement providers, network administrators, et cetera), whereby a plethora of value-added IP-based services may be advantageously implemented. For instance, the following services are illustrative: Quality of Service (QoS) assurance; network performance monitoring and fine-tuning; targeted online advertisements; usage statistics and measurements; security (personal, network, service-related); and dynamic management of service parameters based on the data collected.

Preferably, the media-based parametric data may comprise any of the following, in any combination:
- Markup Language tags such as HyperText Markup Language (HTML) tags, Extended Markup Language (XML) tags, Voice Extended Markup Language (VXML) tags, etc. that are sent and received during the transaction session;
- control characters embedded in the content and content elements that are sent and/or received;
- network pings/tracebacks effectuated for the Internet-compliant device;
- cookies generated during the transaction session;
- time-based metrics, e.g., time spent on a particular Internet page, time spent in a chat session, time during an email session, et cetera;
- click-to-response upload and download times (that is, for example, time taken from the moment the user clicks on an HTML link on an Internet page to the moment the user obtains a successful response such as complete loading of a new page, etc.);
- bandwidth metrics such as effective bandwidth rate at which each session is carried out and its use profile;
- Class of Service (CoS) metrics (e.g., constant bit rate vs. variable bit rate, etc.) and
- auxiliary media services (for example, chat sessions, e-mail, video conferences, Voice-over-IP sessions, etc.) that are invoked during the transaction session.

Those skilled in the art should readily appreciate that the list of the media-based parametrics set forth above is not exhaustive; rather, these parameters and metrics are provided as examples only for purposes of monitoring (and accounting, in some embodiments) in accordance with the teachings of the present invention. Accordingly, any parameters, known or heretofore unknown, that are capable of being tracked, monitored and metered for purposes of Quality-of-Service (QoS) measurements, use measurements, media event measurements, etc. with respect to an Internet transaction session may be advantageously utilized for implementing the browser-based monitoring system of the present invention.

The reporting structure 103 is preferably operable to report the monitored data either on a real-time basis by utilizing dual mode IP multicasting from client to multi-server, or on a store/forward batch transmission basis. In the batch mode, the monitored data is collected and stored locally at the client which is then transmitted periodically based on a predetermined time period (e.g., once every hour, every day, et cetera). Such time-based data output may be coupled with full buffer push out capability or pollable pull capability (i.e., out-of-band service management for packet-based applications). In other exemplary embodiments, the monitored statistical data may be transmitted to an Internet entity (e.g., billing company 112, any content entity, or a management/administrator entity) on a per-event basis (e.g., every click, every download, or every execution of an application, et cetera).

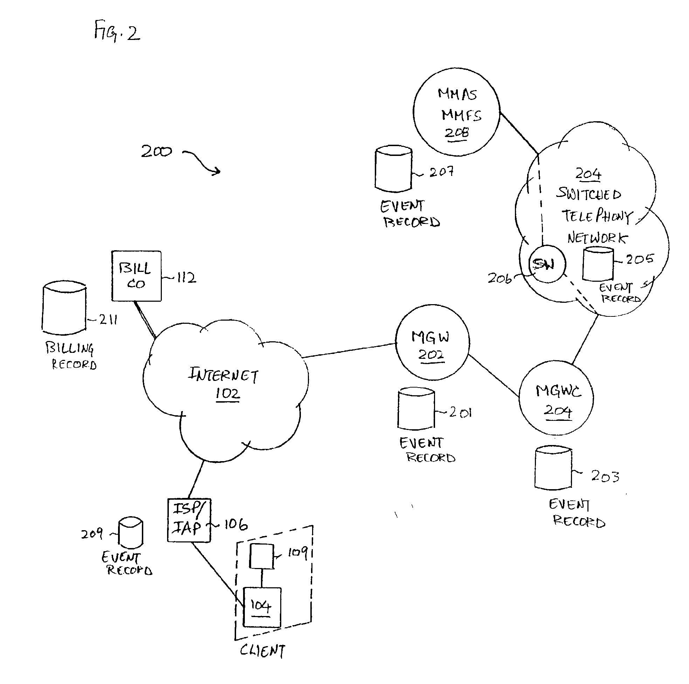

Referring now to FIG. 2, depicted therein is another exemplary network embodiment 200 including the Internet 102 for effectuating browser-based billing in a VoIP application in accordance with the teachings of the present invention wherein media-based parametrics are monitored. The client device 104, operable in this application for effectuating a VoIP call, is provided with the browser 109 and browser-based monitoring system 101 (not explicitly shown in this FIG.) described in particular detail hereinabove.

A Media Gateway (MGW) 202 and Media Gateway Controller (MGWC) 204 arrangement is provided between the Internet 102 and a switched telephony network 204 which is operable to provide telephony services to conventional telephony subscribers (not shown). The switched telephony network 204 may comprise a public wireline telephony network (e.g., the Public Switched Telephony Network or PSTN) or a wireless network (e.g., the Public Land Mobile Network or PLMN), formed from a plurality of switching and signaling nodes, e.g., switch (SW) 206. MGWC 204 is operably coupled to SW 206 for providing a bi-directional pathway for signaling and information between the Internet 102 and the switched telephony network 204. An exemplary service node such as a multimedia application server (MMAS) or multimedia feature server (MMFS) 208 is coupled to SW 206 for effectuating one or more appropriate service logic programs based on call data received at SW 206.

When a VoIP call is initiated by the client device 104, the call is effectuated via intermediary nodes disposed in the network 200 such as MGW 202, MGWC 204, SW 206 and MMAS/MMFS 208. Each node, including the ISP node 106, is operable to generate an event record relating to the VoIP call. For example, event records 201, 203, 205, and 207 are exemplified with respect to nodes MGW 202, MGWC 204, SW 206 and MMAS/MMFS 208, respectively. These event records are "tapped and validated" by the ISP node which creates its consolidated event record 209 for cross-correlating the network-view of service with the browser-view of service. Further, the cross-correlated event records may be forwarded by the ISP entity 106 to the billing company 112 for generating a billing record 211 for such calls.

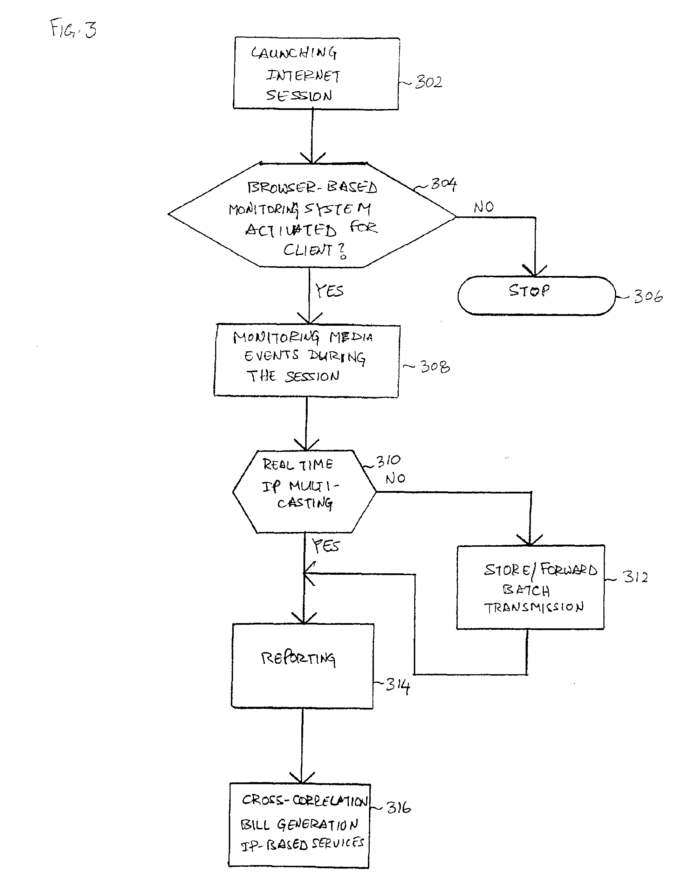

FIG. 3 is a flow chart of the various steps involved in an exemplary embodiment of the browser-based monitoring method (for accounting, by way of example) of the present invention. Upon launching a transaction session (involving either local or remote Internet pages) (step 302), a determination is made whether the browser-based monitoring system is activated for the user's browser operating on the client device (decision block 304). If the browser-based monitoring system is not activated or not operational for the client's Internet-compliant device, the procedure stops (step 306) and appropriate default processes may ensue thereafter. On the other hand, when the browser-based monitoring system is activated, appropriate media events and parameters are detected and monitored (step 308) as described in particular detail hereinabove. A determination (decision block 310) is made thereafter as to the reporting methodology. If the monitoring system is not configured for real-time reporting, a store/forward batch transmission process (step 312) is utilized for reporting the parametric data to an appropriate Internet entity (step 314), which is dependent on service/business agreements among the various entities involved (e.g., subscriber, subscriber's ISP, content entity, network management entity, etc.). Otherwise, a dual mode IP multicasting technique (i.e., single-client-to-many-servers) is utilized for reporting the parametric data to such entities (step 314).

Media-based parametric data may be cross-correlated and statistically analyzed at appropriate entities for effectuating IP-based services. For example, where a billing operator entity is involved, billing records are generated by that entity which, as alluded to hereinabove, may comprise the ISP/IAP or Internet portal serving the user, the ASP, the content exchange entity, or the third-party billing company, etc. Preferably, billing records are generated based on the received cross-correlated event records comprising at least a portion of the media-based event parametrics collected and reported by the browser and/or the ISP. These post-reporting operations are consolidated as step 316 in the flow chart shown in FIG. 3.

Based on the foregoing, those skilled in the art should appreciate that the present invention provides an efficient and robust browser-based monitoring system and method that is advantageously operable for Internet-based commerce. The statistical data monitored during transaction sessions and associated metrics may be analyzed locally or at a host for distance (e.g., by monitoring ping routes), content size, click-to-response times, network application usage, time spent in an application, et cetera. These statistics may be summarized as discrete billing events or event records which may be transmitted to the billing operator/entity. Further, some of these parameters may also be collected at different nodes in the network (such as, e.g., MGWs, MGWCs, switches/routers, feature/policy servers, etc.), which are then concentrated at the ISP serving the user for subsequent transmission to the billing operator/entity. Because of the wide variety of the parameters used for monitoring, customizable billing such as use-based billing, QoS-based billing, event-based billing, or any combination thereof, may be generated by the billing entity.

Whereas usage statistics for billing purposes may be collected from the host entities themselves, virtually an unlimited number of such entities currently exist on the Internet (with thousands more coming online every day) and, therefore, collecting and cross-correlating use data from all the sites that users can potentially access is inefficient and impractical from the vantage point of generating accurate billing records and easy-to-understand billing statements. However, these difficulties are advantageously overcome by collecting such data at the user-level in accordance with the teachings of the present invention. Service providers and billing operators are provided with manageable quantities of data, which can then be analyzed by known statistical methods (e.g., multi-variate analyses, etc.) for customizing billing. For example, a QoS-based billing scheme may be implemented by factoring in a combination of time, delay, throughput, content, etc. Such QoS-billing schemes may operate as key market differentiators for ISPs and IAPs, as well as content providers.

Further, browser-based statistical data collection in accordance with the teachings of the present invention is advantageous from the standpoint of improving the network performance. As those skilled in the art should readily recognize, this is of particular significance in managing the QoS-related issues in an enterprise-based Intranet.

In addition, browser-based data monitoring is advantageous from the users' perspective as well. Because the QoS measurements are made at the local level for each transaction session, a subscriber can verify whether the service the subscriber is receiving (for example, a particular rate of bandwidth) is the same as the service for which the subscriber has subscription. Enterprise IT managers, as corporate users, can negotiate better pricing schemes from service providers based on the use statistics gathered for the individual users in the corporate entity. Moreover, as alluded to hereinabove, the parametric data collected in accordance herewith can be advantageously applied for providing several IP-based services as well.

It is believed that the operation and construction of the present invention will be apparent from the foregoing Detailed Description. While the system and method shown and described have been characterized as being preferred, it should be readily understood that various changes, modifications and enhancements could be made therein without departing from the scope of the present invention as set forth in the following claims.

## Claims

1. A browser-based monitoring method operable in a network including the Internet, comprising the steps of:
launching, by a user, a transaction session via a browser operable on an Internet-compliant device;
tracking, by said browser, a plurality of media-based parameters generated during said transaction session, wherein said media-based parameters are effectuated at least in part due to said user's interaction with said browser;
reporting said media-based parameters to an Internet entity; and
effectuating an IP-based service using at least a portion of said media-based parameters.

2. The browser-based monitoring method as set forth in claim 1, wherein said Internet-compliant device comprises a device selected from the group consisting of: a personal computer, a laptop computer, a hand-held computer, an H.323-compatible terminal, a Session Initiation Protocol (SIP)-based phone, a Personal Digital Assistant (PDA) device, and a Web-enabled interactive terminal, and further wherein said Internet entity comprises an Internet billing entity.

3. The browser-based monitoring method as set forth in claim 2, wherein said Web-enabled interactive terminal comprises a wireless phone.

4. The browser-based monitoring method as set forth in claim 2, wherein said Web-enabled interactive terminal comprises a wireline phone.

5. The browser-based monitoring method as set forth in claim 2, wherein said Web-enabled interactive terminal comprises a television set.

6. The browser-based monitoring method as set forth in claim 2, wherein said Web-enabled interactive terminal comprises a game station.

7. The browser-based monitoring method as set forth in claim 2, wherein said Web-enabled interactive terminal comprises a multimedia player.

8. The browser-based monitoring method as set forth in claim 2, wherein said transaction session comprises accessing an Internet page stored locally on said Internet-compliant device.

9. The browser-based monitoring method as set forth in claim 2, wherein said transaction session comprises accessing an Internet page via a host coupled to the Internet.

10. The browser-based monitoring method as set forth in claim 9, wherein said host comprises a content exchange entity.

11. The browser-based monitoring method as set forth in claim 9, wherein said host comprises an application server associated with an application service provider (ASP), said application server operating to serve at least one of an application software package, an interactive video game package, and a multimedia application.

12. The browser-based monitoring method as set forth in claim 2, wherein said Internet billing entity comprises an Internet service provider (ISP) serving said user.

13. The browser-based monitoring method asset forth in claim 2, wherein said Internet billing entity comprises an Internet portal accessed by said user.

14. The browser-based monitoring method as set forth in claim 2, wherein said Internet billing entity comprises a third-party billing entity having a service agreement with an ISP serving said user.

15. The browser-based monitoring method as set forth in claim 2, wherein said Internet billing entity comprises a third-party billing entity having a service agreement with an application service provider accessed by said user during said transaction session.

16. The browser-based monitoring method as set forth in claim 2, wherein said Internet billing entity comprises a third-party billing entity having a service agreement with a content exchange entity accessed by said user during said transaction session.

17. The browser-based monitoring method as set forth in claim 2, wherein said Internet billing entity comprises a third-party billing entity having a service agreement with an Internet portal accessed by said user during said transaction session.

18. The browser-based monitoring method as set forth in claim 2, wherein said media-based parameters comprise at least one of:
HyperText Markup Language (HTML) tags transmitted during said transaction session, content elements transmitted during said transaction session, network ping tracebacks effectuated for said Internet-compliant device, Extended Markup Language (XML) and Voice-Extended Markup Language (VXML) tags transmitted during said transaction session, cookies generated during said transaction session, time spent on said transaction session, bandwidth at which said transaction session is effectuated, click-to-response upload and download times, and auxiliary media services invoked during said transaction session.

19. The browser-based monitoring method as set forth in claim 18, wherein said reporting step is performed on a predetermined time basis.

20. The browser-based monitoring method as set forth in claim 18, wherein said reporting step is performed on a predetermined event basis.

21. The browser-based monitoring method as set forth in claim 18, wherein said reporting step is performed using Internet Protocol (IP) multicasting from said browser to said Internet billing entity and a plurality of servers disposed on the Internet.

22. A parametric monitoring system operable in a network including the Internet, comprising:
a browser operable with a user's Internet-compliant device for launching a transaction session;
a detector associated with said browser for tracking a plurality of media-based parameters generated during said transaction session, wherein said media-based parameters are effectuated at least in part due to said user's interaction with said browser; and
a reporting structure associated with said Internet-compliant device to report said media-based parameters to an Internet entity, wherein said Internet entity is operable to effectuate an IP-based service based on at least a portion of said media-based parameters.

23. The parametric monitoring system operable in a network including the Internet as set forth in claim 22, wherein said Internet-compliant device comprises a device selected from the group consisting of: a personal computer, a laptop computer, a hand-held computer, an H.323-compatible terminal, a Session Initiation Protocol (SIP)-based phone, a Personal Digital Assistant (PDA) device, and a Web-enabled interactive terminal, and further wherein said Internet entity comprises an Internet billing entity.

24. The parametric monitoring system operable in a network including the Internet as set forth in claim 23, wherein said Web-enabled interactive terminal comprises a wireline phone.

25. The parametric monitoring system operable in a network including the Internet as set forth in claim 23, wherein said Web-enabled interactive terminal comprises a television set.

26. The parametric monitoring system operable in a network including the Internet as set forth in claim 23, wherein said Web-enabled interactive terminal comprises a game station.

27. The parametric monitoring system operable in a network including the Internet as set forth in claim 23, wherein said Web-enabled interactive terminal comprises a multimedia player.

28. The parametric monitoring system operable in a network including the Internet as set forth in claim 23, wherein said Web-enabled interactive terminal comprises a wireless phone.

29. The parametric monitoring system operable in a network including the Internet as set forth in claim 22, wherein said transaction session comprises accessing an Internet page stored locally on said Internet-compliant device.

30. The parametric monitoring system operable in a network including the Internet as set forth in claim 22, wherein said transaction session comprises accessing an Internet page via a host coupled to the Internet.

31. The parametric monitoring system operable in a network including the Internet as set forth in claim 30, wherein said host comprises a content exchange entity.

32. The parametric monitoring system operable in a network including the Internet as set forth in claim 30, wherein said host comprises an application server associated with an application service provider (ASP), said application server operating to serve at least one of an application software package, an interactive video game package, and a multimedia application.

33. The parametric monitoring system operable in a network including the Internet as set forth in claim 22, wherein said Internet billing entity comprises an Internet service provider (ISP) serving said user.

34. The parametric monitoring system operable in a network including the Internet as set forth in claim 22, wherein said Internet billing entity comprises an Internet portal accessed by said user.

35. The parametric monitoring system operable in a network including the Internet as set forth in claim 22, wherein said Internet billing entity comprises a third-party billing entity having a service agreement with an ISP serving said user.

36. The parametric monitoring system operable in a network including the Internet as set forth in claim 22, wherein said Internet billing entity comprises a third-party billing entity having a service agreement with an application service provider accessed by said user during said transaction session.

37. The parametric monitoring system operable in a network including the Internet as set forth in claim 22, wherein said Internet billing entity comprises a third-party billing entity having a service agreement with a content exchange entity accessed by said user during said transaction session.

38. The parametric monitoring system operable in a network including the Internet as set forth in claim 22, wherein said Internet billing entity comprises a third-party billing entity having a service agreement with an Internet portal accessed by said user during said transaction session.

39. The parametric monitoring system operable in a network including the Internet as set forth in claim 22, wherein said media-based parameters comprise at least one of: HyperText Markup Language (HTML) tags transmitted during said transaction session, content elements transmitted during said transaction session, network ping tracebacks effectuated for said Internet-compliant device, Extended Markup Language (XML) and Voice-Extended Markup Language (VXML) tags transmitted during said transaction session, cookies generated during said transaction session, time spent on said transaction session, bandwidth at which said transaction session is effectuated, click-to-response upload and download times, and auxiliary media services invoked during said transaction session.

40. The parametric monitoring system operable in a network including the Internet as set forth in claim 39, wherein said reporting structure is operable to report said media-based parameters to said Internet billing entity on a predetermined time basis.

41. The parametric monitoring system operable in a network including the Internet as set forth in claim 39, wherein said reporting structure is operable to report said media-based parameters to said Internet billing entity on a predetermined event basis.

42. The parametric monitoring system operable in a network including the Internet as set forth in claim 39, wherein said reporting structure is operable to report said media-based parameters to said Internet billing entity using Internet Protocol (IP) multicasting from said browser to said Internet billing entity and a plurality of servers disposed on the Internet.
